# EUROPÄISCHE PATENTSCHRIFT

(11) **EP 1 481 360 B1**
(45) Veröffentlichungstag und Bekanntmachung des Hinweises auf die Patenterteilung: **30.05.2007**
(21) Anmeldenummer: 03743309.1
(22) Anmeldetag: 12.02.2003
(51) Int. Cl.: G06F 3/033, G06K 11/00

(54) **VERFAHREN ZUR ERZEUGUNG VON AUSGANGSSIGNALEN EINER BEDIENUNGSVORRICHTUNG**
METHOD FOR GENERATING OUTPUT SIGNALS OF A CONTROL DEVICE
PROCEDE DE PRODUCTION DE SIGNAUX DE SORTIE D'UN DISPOSITIF DE COMMANDE

(30) Priorität: 01.03.2002 DE 10209290
(43) Veröffentlichungstag der Anmeldung: 01.12.2004
(73) Patentinhaber: paragon AG, 33129 Delbrück (DE)
(72) Erfinder: MÖNKEMÖLLER, Ralf, 33335 Gütersloh (DE)
(74) Vertreter: Lelgemann, Karl-Heinz
(86) Internationale Anmeldenummer: PCT/EP2003/001358
(87) Internationale Veröffentlichungsnummer: WO 2003/075214

(56) Entgegenhaltungen:
- EP-A- 0 432 365
- EP-A- 1 179 768
- US-A- 5 918 195

## Beschreibung

Die Erfindung bezieht sich auf ein Verfahren zur Erzeugung von Ausgangssignalen einer Bedienungsvorrichtung, bei dem ein bewegbares Stellglied der Bedienungsvorrichtung in Bezug auf ein Festglied derselben verstellt wird und unterschiedlichen diskreten Stellgliedpositionen in Bezug auf das Festglied unterschiedliche Ausgangssignale der Bedienungsvorrichtung zugeordnet werden.

Aus dem Stand der Technik sind derartige Verfahren zur Erzeugung von Ausgangssignalen einer Bedienungsvorrichtung bekannt, bei der den angestrebten diskreten Stellgliedpositionen, die bestimmte Vorgänge in einer nachgeschalteten Maschineneinheit auslösen sollen, bestimmte Ausgangssignale zugeordnet sind. Daß diese diskreten Stellgliedpositionen eingestellt sind, wird dadurch erfaßt, daß in der Bedienungsvorrichtung vorgesehene Hall-Sensoren und Magnete in bestimmten diskreten Anordnungen zueinander sich befinden, wobei jeder dieser diskreten Anordnung von Hall-Sensoren und Magneten ein bestimmtes Ausgangssignal zugeordnet wird.

Das Patent US 5,918,195 zeigt ein derartiges Verfahren und bildet die Basis für den Oberbegriff des Anspruchs 1.

Änderungen des Designs, der Geometrie sowie der körperlichen Ausgestaltung der Bedienungsvorrichtung haben notwendigerweise zur Folge, daß die Positionierung der Hall-Sensoren bzw. der Magnete angepaßt werden muß, was dazu führt, daß hierfür neue Layouts erstellt werden müssen.

Der Erfindung liegt die Aufgabe zugrunde, ein Verfahren zur Erzeugung von Ausgangssignalen einer Bedienungsvorrichtung der eingangs geschilderten Art zu schaffen, bei dem Änderungen des Designs, der Ausgestaltung sowie der geometrischen Abmessungen der Bedienungsvorrichtung vorgenommen werden können, ohne daß dies zu Änderungen bei der Sensorik der Bedienungsvorrichtung führt.

Diese Aufgabe wird erfindungsgemäß durch das Verfahren gemäß Anspruch 1 gelöst.

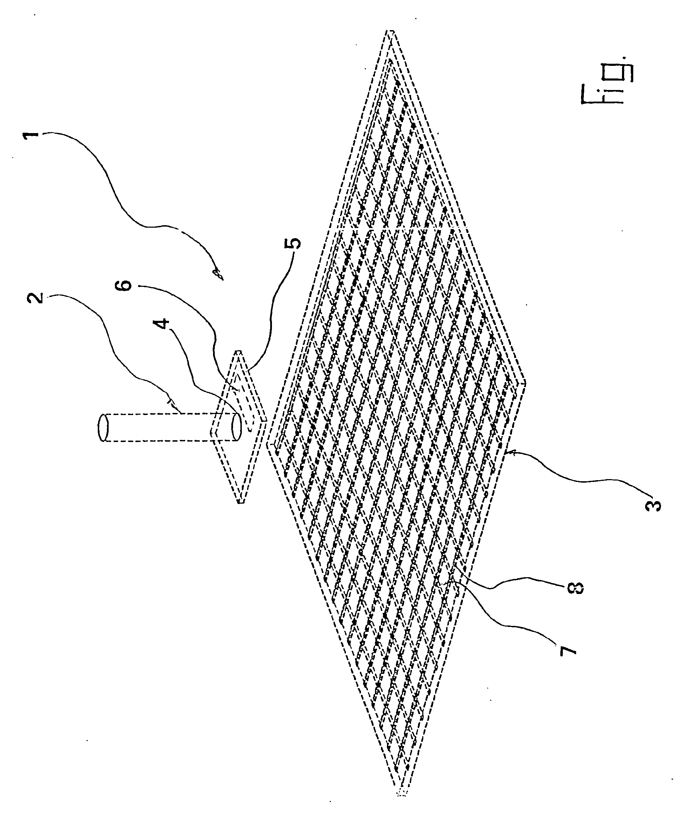

Im folgenden wird die Erfindung anhand einer Ausführungsform unter Bezugnahme auf die Zeichnung näher erläutert, anhand deren einziger Figur die Verfahrensweise bei der kontinuierlichen Erfassung der Stellgliedposition in Bezug auf das Festglied der Bedienungsvorrichtung verdeutlicht ist.

Bei einem erfindungsgemäßen Verfahren zur Erzeugung von Ausgangssignalen einer Bedienungsvorrichtung 1 wird ein bewegbares Stellglied 2 der Bedienungsvorrichtung 1 verstellt, beispielsweise durch manuelle Betätigung od.dgl. Zu der Bedienungsvorrichtung 1 gehört ein Festglied 3, welches auch bei einer Bewegung bzw. Verstellung des Stellglieds 2 ortsfest bleibt.

Sofern das Stellglied 2 in Bezug auf das Festglied 3 der Bedienungsvorrichtung 1 bestimmte definierte Positionen einnimmt, werden an einer der Bedienungsvorrichtung 1 nachgeschalteten technischen Einheit bestimmte Vorgänge ausgelöst, z.B. die Umschaltung von einem Gang in einen anderen Gang bei einem Schaltgetriebe, die Verstellung einer Temperaturvorgabe an einer Klimaeinrichtung, die Verstellung der Durchflußmenge einer Fluidleitung od.dgl.

Im Falle der das Stellglied 2 und das Festglied 3 aufweisenden, in der einzigen Figur prinzipiell gezeigten Bedienungsvorrichtung 1 wird die jeweils aktuelle Stellgliedposition kontinuierlich erfaßt. Hierzu ist das Stellglied 2 an seinem dem Festglied 3 zugewandten Endabschnitt 4, der durch eine Endplatte 5 gebildet wird, mit einer Wechselstromspule 6 versehen.

Das Festglied 3 ist als Leiterplatte ausgebildet, auf der eine Vielzahl von Antennen bzw. Leiterbahnen 7, 8 angeordnet sind.

Im dargestellten Ausführungsbeispiel verlaufen die Antennen 7 parallel und mit gleichem Abstand zueinander. Die ebenfalls parallel und mit gleichem Abstand zueinander verlaufenden Antennen bzw. Leiterbahnen 8 sind in Bezug auf die erstgenannten Antennen bzw. Leiterbahnen 7 senkrecht angeordnet.

Bei einer Bewegung des Stellglieds 2 und damit der Wechselstromspule 6 wird ein durch die Wechselstromspule 6 zu den Antennen bzw. Leiterbahnen 7, 8 abgestrahltes Signal hinsichtlich seiner Stärke auf die einzelnen Antennen 7, 8 variiert.

Die von den einzelnen Antennen bzw. Leiterbahnen 7, 8 an einen in der Figur nicht gezeigten Mikrocomputer weitergeleiteten Empfangssignale werden im Mikrocomputer ausgewertet, so daß für jede Position des Stellglieds 2 in Bezug auf das als Leiterplatte ausgebildete Festglied 3 eine bestimmte Signalstruktur vorliegt, die durch die Empfangssignalstärke jeder der Antennen bzw. Leiterbahnen 7, 8 definiert ist.

Im Mikrocomputer sind bestimmte Ausgangssignale erzeugbar oder abgespeichert, die bestimmte Einstellungen der der Bedienungsvorrichtung nachgeschalteten maschinellen Einheit zur Folge haben, sofern sie an ein Steuergerät dieser maschinellen Einheit weitergeleitet werden.

Um diese unterschiedlichen Ausgangssignale den je nach Design der Bedienungsvorrichtung sich ergebenden Stellgliedpositionen zuzuordnen, werden die entsprechenden diskreten Stellgliedpositionen nacheinander eingenommen. In jeder dieser Stellgliedpositionen wird die hierfür charakteristische Signalstruktur, die sich aus den von den Antennen bzw. Leiterbahnen 7, 8 an den Mikrocomputer weitergeleiteten Empfangssignalstärken ergibt, ermittelt. Das für die gerade eingenommene diskrete Stellgliedposition vorgesehene Ausgangssignal wird der aktuell erfaßten Signalstruktur zugeordnet.

Dieser Vorgang wird für alle vorgesehenen diskreten Stellgliedpositionen nacheinander durchgeführt. Danach ist jeder diskreten Stellgliedposition bzw. jeder sich aus dieser ergebenden Signalstruktur das entsprechende Ausgangssignal des Mikrocomputers zugeordnet, welches die gewünschten Vorgänge bzw. Einstellungen in der nachgeschalteten Maschineneinheit auslöst.

Im Falle des erfindungsgemäßen Verfahrens ist es somit ohne weiteres möglich, den diskreten, bestimmte Vorgänge in nachgeordneten Maschineneinheiten auslösenden Stellgliedpositionen zunächst Signalstrukturen zuzuordnen. Diesen Signalstrukturen werden dann den erwünschten auszulösenden Vorgängen auf der nachgeschalteten Maschineneinheit zugehörige Ausgangssignale zugeordnet.

Änderungen des Designs der Bedienungsvorrichtung haben Änderungen der diskreten Stellgliedpositionen zur Folge, wobei für diese geänderten diskreten Stellgliedpositionen die sich aus den Änderungen ergebenden veränderten Signalstrukturen ermittelt werden. Diesen geänderten Signalstrukturen werden dann die unveränderten unterschiedlichen Ausgangssignale der Bedienungsvorrichtung zugeordnet.

Eine Anpassung an unterschiedliche geometrische und körperliche Ausgestaltungen der Bedienungsvorrichtung ist somit in einfacher Weise realisierbar, ohne daß die bei dem erfindungsgemäßen Verfahren einzusetzende Sensorik verändert werden müßte.

Des weiteren kann bei der Bandendeprüfung in der Fertigung der Bedienungsvorrichtung der Signalverlauf der kontinuierlich erfaßten, der aktuellen Stellgliedposition entsprechenden Signalstruktur entsprechend der Verstellung des Stellglieds kalibriert werden. Hierdurch können Fertigungstoleranzen bei der Herstellung der Bedienungsvorrichtungen, die im Zusammenhang mit dem erfindungsgemäßen Verfahren zum Einsatz kommen, ausgeglichen werden.

## Patentansprüche

1. Verfahren zur Erzeugung von Ausgangssignalen einer Bedienungsvorrichtung (1), bei dem ein bewegbares Stellglied (2) der Bedienungsvorrichtung (1) in Bezug auf ein Festglied (3) derselben verstellt wird, unterschiedlichen diskreten Stellgliedpositionen in Bezug auf das Festglied (3) unterschiedliche Ausgangssignale der Bedienungsvorrichtung (1) zugeordnet werden, kontinuierlich ein der jeweils aktuellen Stellgliedposition entsprechendes Signal erzeugt wird, die Signalstärken der Signale für jede der diskreten Stellgliedpositionen, denen unterschiedliche Ausgangssignale der Bedienungsvorrichtung (1) zuzuordnen sind, gemessen werden, und jedemeiner der unterschiedlichen diskreten Stellgliedpositionen entsprechenden Ssignal ein unterschiedliches Ausgangssignal der Bedienungsvorrichtung (1) zugeordnet wird, **dadurch gekennzeichnet, dass** die Stellgliedposition kontinuierlich erfasst wird, indem an festgliedfesten Antennen (7, 8), von denen erstere (7) parallel und mit gleichem Abstand zueinander und zweitere (8) parallel und mit gleichem Abstand zueinander und senkrecht zu ersteren (7) verlaufen, von einer stellgliedfesten Wechselstromspule (6) abgestrahlte Signale empfangen und, vorzugsweise in einem Mikrocomputer, ausgewertet werden, wobei aus den unterschiedlichen Signalstärken der an den einzelnen Antennen empfangenen Signale charakteristische Signalstrukturen ermittelt und den entsprechenden Stellgliedpositionen zugeordnet werden.

2. Verfahren zur Erzeugung von Ausgangssignalen einer Bedienungsvorrichtung nach Anspruch 1, bei dem bei einer Bandendeprüfung in der Fertigung der Bedienungsvorrichtung (1) der Signalverlauf der kontinuierlich erfaßten, der aktuellen Stellgliedposition entsprechenden Signalstruktur entsprechend der Verstellung des Stellglieds (2) kalibriert wird.

## Claims

1. A method for generating output signals of a control device (1) in which a movable command element (2) of the control device (1) is moved relative to a stationary element (3), different output signals of the control device (1) are assigned to different discrete positions of the command element relative to the stationary element (3), a signal corresponding to the actual position of the command element (2) is generated in a continuous manner, the signal strengths of the signals are measured for each of the discrete positions of the command element, to which different output signals of the control device (1) are to be assigned, and a different output signal of the control device (1) is assigned to each signal corresponding to one of the different discrete positions of the command element, **characterised in that** the position of the command element is continuously detected, whereby signals emitted by an AC coil (6) with fixed command element are received at antennae (7, 8) with fixed stationary elements, of which the former (7) run parallel and at the same distance from one another and the latter (8) run parallel and at the same distance from one another and perpendicular to the former (7), and are evaluated, preferably in a microcomputer, wherein characteristic signal structures are determined from the different signal strengths of the signals received at the individual antennae and allocated to the corresponding command element positions.

2. The method for generating output signals of a control device according to claim 1, wherein in band-end testing in the production of the control device (1) the signal profile of the continuously detected signal structure corresponding to the actual position of the command element is calibrated according to the adjustment of the command element (2).

## Revendications

1. Procédé de génération de signaux de sortie d'un dispositif de commande (1) dans lequel un actionneur mobile (2) du dispositif de commande (1) est déplacé par rapport à un élément fixe (3) de ce dernier, différentes positions discrètes de l'actionneur par rapport à l'élément fixe (3) sont associées à différents signaux de sortie du dispositif de commande (1), un signal correspondant à la position respectivement actuelle de l'actionneur est généré en continu, les intensités de signaux des signaux pour chacune des positions discrètes de l'actionneur auxquelles il convient d'associer différents signaux de sortie du dispositif de commande (1) sont mesurées et un signal de sortie différent du dispositif de commande (1) est associé à chaque signal correspondant à l'une des différentes positions discrètes, **caractérisé en ce que** la position de l'actionneur est détectée en continu, **en ce que** sur des antennes (7, 8) qui sont stationnaires sur l'élément fixe, dont des premières (7) s'étendent à la parallèle et à une même distance les unes des autres et des deuxièmes (8) s'étendent à la parallèle et à une même distance les unes des autres et à la perpendiculaire des premières (7) des signaux émis par une bobine à courant alternatif (6) stationnaire sur l'actionneur sont réceptionnés et évalués de préférence dans un micro-ordinateur, des structures signalétiques caractéristiques étant déterminée à partir des différentes intensités de signaux des signaux réceptionnés sur les antennes individuelles et associées aux positions correspondantes de l'actionneur.

2. Procédé de génération de signaux de sortie d'un dispositif de commande selon la revendication 1, dans lequel, lors d'une vérification de bande dans la fabrication du dispositif de commande (1), la courbe signalétique de la structure signalétique détectée en continu, correspondant à la position actuelle de l'actionneur est calibrée en fonction du déplacement de l'actionneur (2).
